# EUROPÄISCHE PATENTANMELDUNG

(11) **EP 1 137 150 A2**
(43) Veröffentlichungstag der Anmeldung: **26.09.2001**
(21) Anmeldenummer: 01105392.3
(22) Anmeldetag: 12.03.2001
(51) Int. Cl.: H02J 7/00

(54) **Zwei-Batteriensystem**

(30) Priorität: 22.03.2000 DE 10014243
(71) Anmelder: Volkswagen Aktiengesellschaft, 38436 Wolfsburg (DE); Robert Bosch GmbH, 70469 Stuttgart (DE)
(72) Erfinder: Dierker, Uwe, 38550 Isenbüttel (DE); Kneifel, Dr., 71701 Schwieberdingen (DE)

(57) **Zusammenfassung**

Die Erfindung betrifft ein Zwei-Batteriensystem (1), umfassend eine Starterbatterie (2), eine Bordnetzbatterie(3), wobei die elektrischen Verbraucher in startrelevante Verbraucher und Bordnetzverbraucher eingeteilt sind, wobei zwischen der Starterbatterie (2) und den startrelevanten Verbrauchern und zwischen der Bordnetzbatterie (3) und den startrelevanten Verbrauchern jeweils ein Schaltelement angeordnet ist, mittels derer wechselseitig die startrelevanten Verbraucher durch ein Batterie-Steuergerät (6) einer Batterie zuordenbar sind, wobei das Batterie-Steuergerät (6) zwischen der Starterbatterie (2) und den startrelevanten Verbrauchern angeordnet ist und je nach Betriebszustand einen Stromfluß von der Bordnetzbatterie (3) zur Starterbatterie (2) oder von der Starterbatterie (2) zu den startrelevanten Verbrauchern erlaubt.

## Beschreibung

Die Erfindung betrifft ein Zwei-Batteriensystem und ein Verfahren zur Ansteuerung des Zwei-Batteriensystems.

Ein derartiges Zwei-Batteriensystem mit einer Bordnetzbatterie und einer Starterbatterie ist aus der DE 38 41 769 bekannt, die bei aktivem Generator miteinander verbunden sind.
Dies hat bei geringer Generatorstromzufuhr den Nachteil, daß die Bordnetzbatterie durch Ladungsausgleich auf Kosten der Starterbatterie geladen wird, wenn der Ladezustand der Bordnetzbatterie schlechter als der der Starterbatterie ist. Beim bekannten Bordnetz ist auch zwischen der Bordnetzbatterie mit den Bordnetzverbrauchem und dem übrigen Teil des Bordnetzes ein Schalter angebracht, der bei Generatorstillstand geöffnet wird, sobald die Starterbatteriespannung unter einen zulässigen Grenzwert sinkt. Diese Maßnahme schützt die Starterbatterie nur bei Generatorstillstand vor einer vollständigen Entladung und läßt zudem eine Teilentladung der Starterbatterie zu. Durch diese schlechte Ausgangsbedingung wird beim Fahrtbeginn die Belastung der Starterbatterie verstärkt, wenn ein Ladungsausgleich der beiden Batterien zu Ungunsten der Starterbatterie stattfindet. Dies kann im Extremfall zur vollständigen Entladung oder Zerstörung der Starterbatterie führen.

Aus der DE 40 28 242 ist ein Zwei-Batteriensystem bekannt, bei dem die Verbindung zwischen Starterbatterie und Bordnetzbatterie unabhängig vom Fahrzustand auftrennbar ist, wenn anderenfalls die Bordnetzbatterie aus der Starterbatterie aufgeladen werden würde. Die beiden Batterien sind miteinander verbunden, wenn die Bordnetzbatteriespannung größer ist als die Starterbatteriespannung. Ist die Spannung der Bordnetzbatterie kleiner als die der Starterbatterie, werden die beiden Batterien voneinander getrennt. Die Trennung kann unterschiedlich, beispielsweise durch Abschalten der Starterbatterie vom übrigen Bordnetz vorgenommen werden. Auf diese Weise wird die Starterbatterie nicht durch eine entladene Bordnetzbatterie belastet, der Generator kann im Arbeitsmodus die wichtigsten Verbraucher versorgen und gleichzeitig die Bordnetzbatterie aufladen. Die beiden Batterien können auch durch ein Abschalten der Bordnetzbatterie vom übrigen Bordnetz getrennt werden. Bei einer gegebenenfalls dann bestehenden Verbindung zwischen Generator und Starterbatterie kann die Starterbatterie aufgeladen werden.

Nachteilig an dem bekannten Zwei-Batteriensystem ist dessen aufwendiges Lademanagement, da eine kontinuierliche Überwachung des Bordnetzzustandes notwendig ist. Darüber hinaus führt ein häufiges Schalten des Verbindungsmittels zu dessen Verschleiß.

Der Erfindung liegt daher das technische Problem zugrunde, ein Zwei-Batteriensystem und ein Verfahren zu dessen Ansteuerung zu schaffen, mittels derer ein zuverlässiges Starten und ein einfaches Lademanagement möglich ist, ohne die Schaltmittel einem übermäßigen Verschleiß auszusetzen.

Die Lösung des technischen Problems ergibt sich durch die Gegenstände mit den Merkmalen der Patentansprüche 1 und 11. Weitere vorteilhafte Ausgestaltungen der Erfindung ergeben sich aus den Unteransprüchen.

Hierzu wird zwischen der Starterbatterie und den startrelevanten Verbrauchern und zwischen der Bordnetzbatterie und den startrelevanten Verbrauchern jeweils ein Schaltelement angeordnet, mittels derer wechselseitig die startrelevanten Verbraucher durch ein Batterie-Steuergerät einer Batterie zuordenbar sind, wobei das Batterie-Steuergerät zwischen der Starterbatterie den startrelevanten Verbrauchern angeordnet ist und je nach Betriebszustand einen Stromfluß von der Bordnetzbatterie zur Starterbatterie oder von der Starterbatterie zu den startrelevanten Verbrauchern erlaubt, wobei die Schaltmittel ohne wesentliche Lastströme geschaltet werden können. Des weiteren erlaubt der Strompfad über das Batterie-Steuergerät ein Laden der Starterbatterie und ein Umschalten der startrelevanten Verbraucher, ohne die beiden Batterien direkt miteinander zu verbinden, so daß unerwünschte Querströme zwischen den Batterien, die eine Zerstörung von Bauelementen bewirken könnten, vermieden werden.

In einer bevorzugten Ausführungsform ist zwischen der Starterbatterie und der Bordnetzbatterie ein weiteres Schaltelement angeordnet, das von dem Batterie-Steuergerät ansteuerbar ist, wodurch im Startfall die beiden Batterien parallel geschaltet werden können, was insbesondere bei einem Kaltstart vorteilhaft ist oder wenn der Starter allgemein große Startströme benötigt.

Die Schaltelemente sind vorzugsweise als Relais ausgebildet, wobei das Relais zwischen den beiden Batterien aufgrund der hohen Startströme als Leistungsrelais ausgebildet ist.

In einer weiteren bevorzugten Ausführungsform ist das Relais zwischen der Bordnetzbatterie und den startrelevanten Verbrauchern als Öffner und das Relais zwischen der Starterbatterie und den startrelevanten Verbrauchern als Schließer ausgebildet. Dadurch sind die startrelevanten Verbraucher standardmäßig im Ruhezustand der Bordnetzbatterie zugeordnet, die im Regelfall auch alle Verbraucher versorgen kann, so daß Schaltvorgänge nur im Notfall notwendig sind und die Relais im Normalfall das Bordnetz nicht weiter belasten.

Im Ruhezustand entkoppelt dann das Batterie-Steuergerät die Starterbatterie von der Bordnetzbatterie, so daß über das geschlossene Schaltelement der Bordnetzbatterie keine Ausgleichsströme von der Starterbatterie zur Bordnetzbatterie fließen können.

Im Betrieb mit erregtem Generator arbeitet das Batterie-Steuergerät als Hochsetzsteller (DC/DC Wandler), wodurch beispielsweise eine 12V- Ausgangsspannung der Bordnetzbatterie auf 15 V hochgesetzt werden kann. Dadurch liegt an der der Starterbatterie zugewandtem Seite des Batterie-Steuergerätes stets ein höheres Potential als an der Starterbatterie, so daß ein gerichteter Ladestrom zur Starterbatterie sichergestellt ist. Da die Hochsetzsteller in einem weiten Spannungsbereich arbeiten, ist somit nahezu unabhängig vom Ladezustand der Bordnetzbatterie ein Ladestrom zur Starterbatterie gewährleistet.

Im Notstartbetrieb, wenn also die startrelevanten Verbraucher durch die Starterbatterie versorgt werden sollen, ermöglicht das Batterie-Steuergerät eine elektrische Verbindung zwischen der Starterbatterie und den startrelevanten Verbrauchern. Dadurch kann das Schaltelement der Bordnetzbatterie bereits gesperrt bzw. geöffnet werden, bevor das Schaltelement der Starterbatterie bereits durchgeschaltet bzw. geschlossen ist, ohne daß die startrelevanten Verbraucher kurzzeitig ohne Spannungsversorgung sind.

In einer weiteren bevorzugten Ausführungsform ist parallel zu den startrelevanten Verbrauchern ein Relais angeordnet, mittels dessen im Notstartbetrieb ein Klemme 15 entsprechendes Signal für die startrelevanten Verbraucher erzeugbar ist.

Die Erfindung wird nachfolgend anhand eines bevorzugten Ausführungsbeispieles näher erläutert. Die Fig. zeigen:

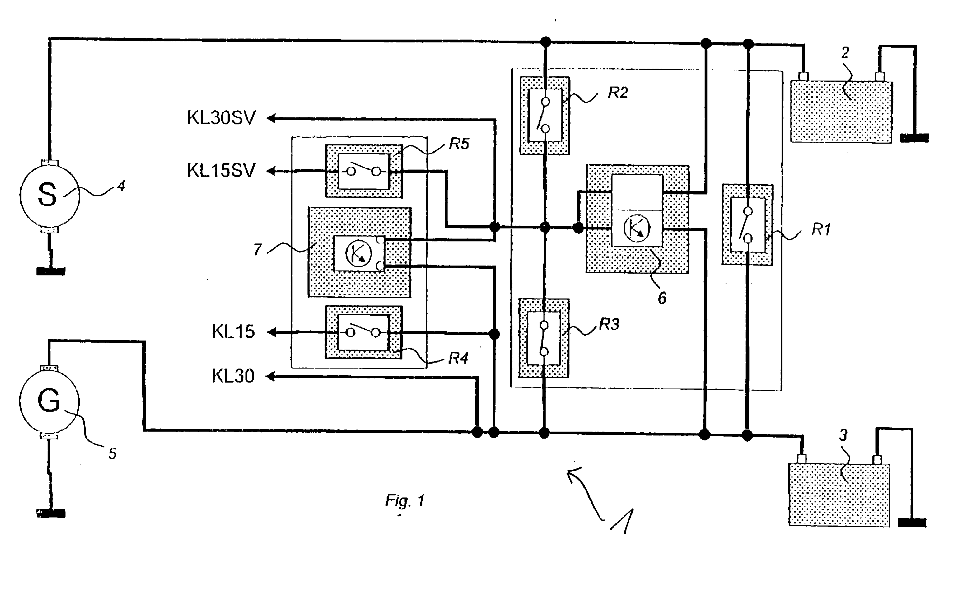

- Fig. 1: ein Prinzipschaltbild eines Zwei-Batteriensystems im Ruhezustand,
- Fig. 2: ein Prinzipschaltbild des Zwei-Batteriensystems gemäß Fig. 1 im Normalbetrieb,
- Fig. 3: ein Prinzipschaltbild des Zwei-Batteriensystems gemäß Fig. 1 im Notstartbetrieb in einer ersten Schaltvariante,
- Fig.4: ein Prinzipschaltbild des Zwei-Batteriensystems gemäß Fig.1 im Notstartbetrieb in einer zweiten Schaltvariante und
- Fig.5: ein Prinzipschaltbild des Zwei-Batteriensystems gemäß Fig.1 im Crash-Fall.

Das Zwei-Batteriensystem 1 umfaßt eine Starterbatterie 2, eine Bordnetzbatterie 3, einen Starter 4, einen Generator 5, ein Batterie-Steuergerät 6 und ein Startfreigabe-Steuergerät 7. Die elektrischen Verbraucher sind in Bordnetzverbraucher, startrelevante Verbraucher und "Zündung-ein"-benötigende Verbraucher unterteilt. Dabei sind die Bordnetzverbraucher der Klemme 30 und die startrelevanten Verbraucher der Klemme 30 SV zugeordnet. Die "Zündung-ein"-benötigenden Bordnetzverbraucher sind der Klemme 15 und die "Zündung-ein"-benötigenden startrelevanten Verbraucher sind der Klemme 15 SV zugeordnet, wobei deren Betriebsspannungsversorgung auch über die Klemme 30 bzw. 30 SV erfolgen kann.
Ein Beispiel für "Zündung-ein"-benötigende Verbraucher ist das Airbag-Steuergerät, das diese Information benötigt, um von einem Ruhezustand in einen aktiven Zustand umzuschalten. Zwischen der Starterbatterie 2 und der Bordnetzbatterie 3 ist ein erstes Relais R1 angeordnet, das durch das Batterie-Steuergerät 6 ansteuerbar ist. Des weiteren sind zwischen der Starterbatterie 2 und der Klemme 30 SV bzw. Klemme 15 SV und zwischen der Bordnetzbatterie 3 und der Klemme 30 SV bzw. Klemme 15 SV jeweils ein Relais R2 bzw. R3 angeordnet, wobei das Relais R2 als Schließer und das Relais R3 als Öffner ausgebildet sind. Die Relais R2 und R3 werden ebenfalls durch das Batterie-Steuergerät 6 angesteuert. Der Klemme 15 und der Klemme 15 SV ist jeweils ein weiteres Relais R4 bzw. R5 zugeordnet, die durch das Startfreigabe-Steuergerät 7 geschaltet werden. Die Klemme 30 ist direkt mit der Bordnetzbatterie 3 verbunden. Des weiteren ist die Bordnetzbatterie 3 auch Spannungsversorgung für das Batterie-Steuergerät 6 und das Startfreigabe-Steuergerät 7, wobei das Batterie-Steuergerät 6 auch über eine redundante Spannungsversorgungsleitung zur Starterbatterie 2 und das Startfreigabe-Steuergerät 7 über eine redundante Spannungsversorgung aus Klemme 30 SV verfügt, die jedoch im Regelfall die Starterbatterie 2 nicht belasten.

Im Ruhezustand ist nur das Relais R2 geschlossen und alle anderen Relais R1, R3, R4, R5 sind offen. Über die offenen Relais R1, R2 und das sperrende Batterie-Steuergerät 6 ist die Starterbatterie 2 vollkommen unbelastet. Der Ruhestrom von Bordnetzverbrauchern an Klemme 30 und von dem Batterie-Steuergerät 6 bzw. Startfreigabe-Steuergerät 7 wird von der Bordnetzbatterie 3 geliefert.

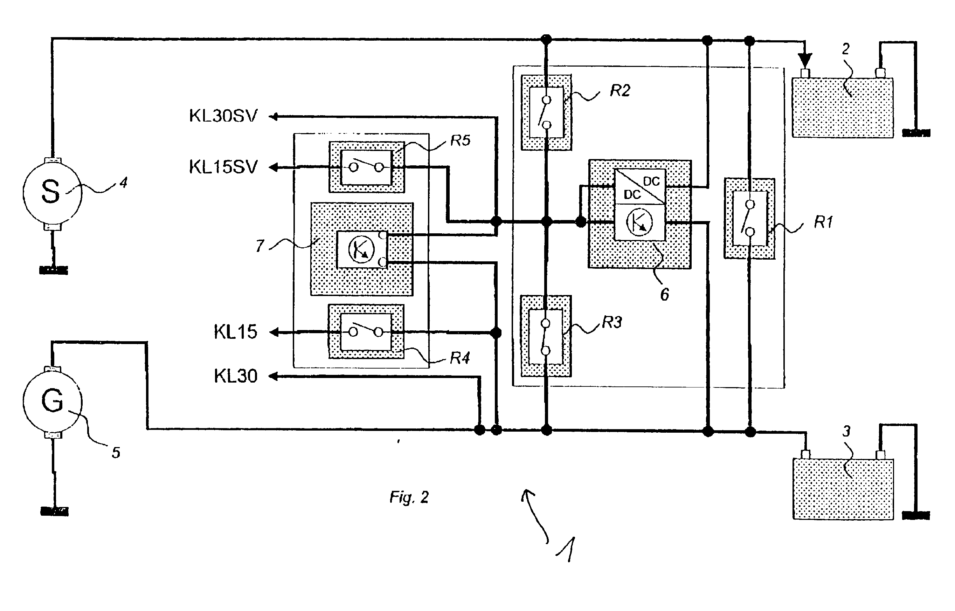

Vor Einleitung eines Startvorgangs überprüft das Batterie-Steuergerät 6 den Ladezustand der Bordnetzbatterie 3. Ist der Ladezustand zur Versorgung der Steuergeräte und startrelevanten Verbraucher ausreichend, so bleiben die Relais R2, R3 in ihrer Ruhestellung. Die Relais R4 und R5 werden geschlossen, so daß die Klemme 15 bzw. 15 SV mit Spannung versorgt wird. Danach wird ein Klemme 50- Signal erzeugt, das dann den eigentlichen Startvorgang einleitet, wobei gegebenenfalls das Relais R1 durch das Batterie-Steuergerät 6 geschlossen wird, um einen ausreichenden Starterstrom zu liefern. Nach dem Startvorgang bleiben die Relais R4, R5 geschlossen und das gegebenenfalls geschlossene Relais R1 wird wieder geöffnet. Das Batterie-Steuergerät 6 schaltet in einen Hochsetzsteller-Modus um und ermöglicht einen gerichteten Strompfad von der Bordnetzbatterie 3 über das Relais R3 und den Hochsetzsteller zur Starterbatterie 2. Dieser Normalbetrieb ist in Fig. 2 dargestellt.

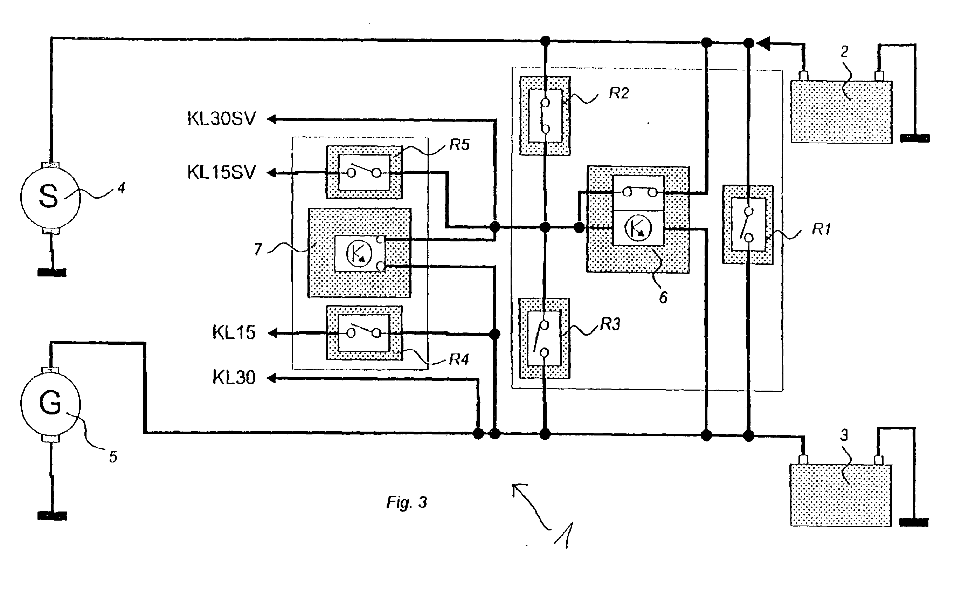

Ergibt hingegen die Überprüfung des Bordnetzzustandes vor Einleitung des Startvorganges, daß die Bordnetzbatterie 3 nicht die startrelevanten Verbraucher an Klemme 30 SV versorgen kann, so werden diese der Starterbatterie 2 zugeordnet. Hierzu schaltet das Batterie-Steuergerät 6 zunächst durch, was durch den geschlossenen Schalter symbolisiert wird. Somit sind die Starterbatterie 2 über das Batterie-Steuergerät 6 und die Bordnetzbatterie 3 über das geschlossene Relais R3 parallelgeschaltet. Anschließend wird das Relais R3 geöffnet und das Relais R2 geschlossen, wobei im Moment, wo Relais R3 bereits offen und Relais R2 noch nicht geschlossen ist, das Batterie-Steuergerät 6 kurzzeitig den Strom übernimmt. Das als einfacher Schalter dargestellte Schaltelement im Batterie-Steuergerät 6 ist vorzugsweise ein Leistungshalbleiter, mittels dessen ein Überstrom abschaltbar ist, so daß größere Entladeströme von der Starterbatterie 2 zur Bordnetzbatterie 3 vermieden werden. Nachdem das Relais R2 geschlossen ist, sperrt das Batterie-Steuergerät 6 und der Strom für die startrelevanten Verbraucher fließt ausschließlich über das Relais R2. Anschließend kann dann das Startfreigabe-Steuergerät 7 das Relais R5 schließen, so daß ein Signal Klemme 15 SV erzeugt wird, was in Fig. 3 dargestellt ist. Anschließend wird ein Klemme 50-Signal erzeugt und der Startvorgang eingeleitet. Mit der Erregung des Generators 5 wird die Bordnetzbatterie 3 langsam geladen und die Klemme 30 wieder mit Spannung versorgt. Bei Bedarf kann zur Unterstützung des Generators kurzzeitig das Relais R1 geschlossen werden. Erlaubt der Zustand der Bordnetzbatterie 3 wieder eine Spannungsversorgung der Bordnetzverbraucher, so schaltet das Startfreigabe-Steuergerät 7 das Relais R4, so daß Klemme 15 wieder mit Spannung versorgt wird. Anschließend erfolgt dann die Umschaltung der startrelevanten Verbraucher von der Starterbatterie 2 auf die Bordnetzbatterie 3. Hierzu schaltet das Batterie-Steuergerät 6 zunächst durch, so daß das Relais R2 und das Batterie-Steuergerät 6 parallelgeschaltet sind. Anschließend wird das Relais R2 geöffnet und das Relais R3 geschlossen. In der Zeit, wo das Relais R2 schon offen und das Relais R3 noch nicht geschlossen ist, übernimmt wieder der Halbleiter im Batterie-Steuergerät 6 den Strom, so daß die startrelevanten Verbraucher an Klemme 30 SV bzw. Klemme 15 SV nicht kurzzeitig ohne Spannungsversorgung sind. Nachdem R3 geschlossen ist schaltet das Batterie-Steuergerät 6 auf den Hochsetzsteller-Modus um.

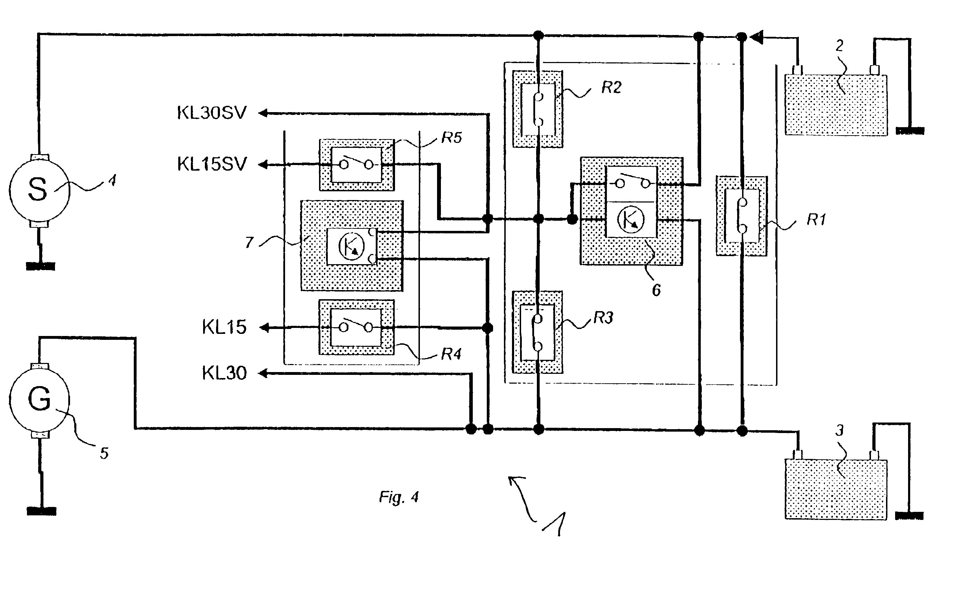

Eine alternative Möglichkeit zur Reduzierung der Ströme durch die Relais R2 und R3 in den Umschaltvorgängen ist in Fig.4 dargestellt. Dabei wird zum Zeitpunkt des Umschaltens das Relais R1 geschlossen, wodurch die Starterbatterie 2 und die Bordnetzbatterie 3 parallel geschaltet sind und ein Potentialausgleich stattfindet.

Eine weitere Form des Notbetriebes stellt eine entladene Starterbatterie 2 dar. In diesem Fall ist das Relais R2 offen und das Relais R3 geschlossen (Ruhezustand). Die startrelevanten Verbraucher an Klemme 30 SV werden über die Bordnetzbatterie 3 versorgt. Prinzipiell könnte ganz normal parallel aus beiden Batterien gestartet werde. Um jedoch die Belastung für die Bordnetzbatterie 3 zu reduzieren, bleibt das Relais R4 offen und nur das Relais R5 wird geschlossen. Erst wenn der Generator 5 erregt ist wird das Relais R5 geschlossen und die übrigen Bordnetzverbraucher eingeschaltet.

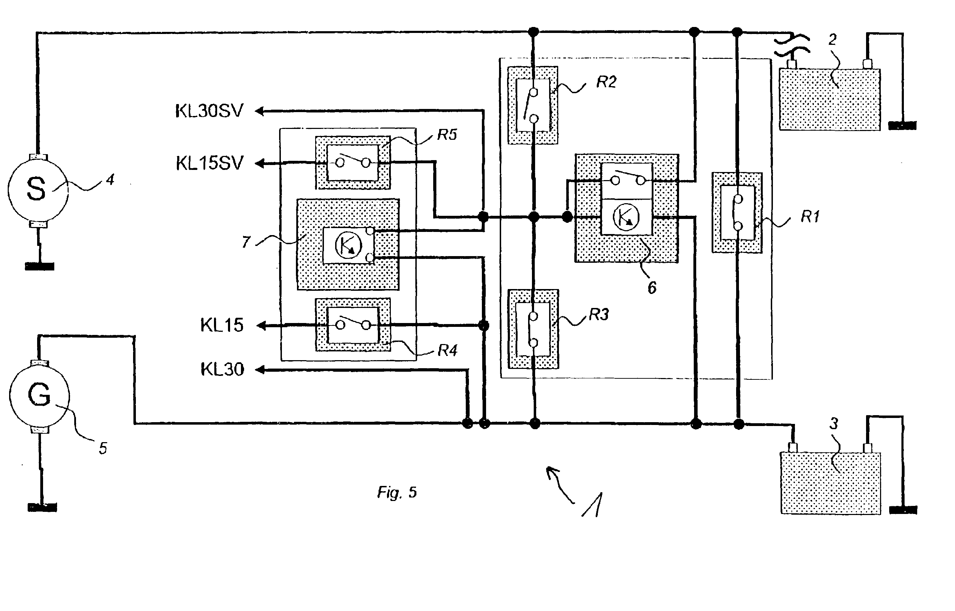

In der Fig.5 ist das Prinzipschaltbild dargestellt, wie gegebenenfalls nach einem Crash-Fall gestartet werden kann. Bei einem Crash-Fall wird der Pluspol der Starterbatterie 2 durch ein pyrotechnisches Element weggesprengt, was durch die Unterbrechung an der Starterbatterie 2 symbolisiert ist. In diesem Betriebszustand ist das Relais R1 offen. Mittels des Batterie-Steuergerätes 6 kann nun die Starterleitung auf Kurzschluß untersucht werden. Hierzu stellt das Batterie-Steuergerät 6 eine elektrische Verbindung zur Starterleitung her, wobei das Potential am Batterie-Steuergerät 6 derart eingestellt wird, daß bei Kurzschluß auf der Starterleitung nur ein geringer Prüfstrom fließt, der keine Brandgefahr darstellt. Weist die Starterleitung hingegen keinen Kurzschluß auf, so kann kein Strom fließen, da die Verbindung zur Starterbatterie 2 offen ist. Stellt nun das Batterie-Steuergerät 6 fest, daß die Starterleitung keinen Kurzschluß aufweist, so kann das Relais R1 geschlossen werden und der Starter 4 aus der Bordnetzbatterie 3 versorgt werden.

## Patentansprüche

1. Zwei-Batteriensystem, umfassend eine Starterbatterie, eine Bordnetzbatterie, wobei die elektrischen Verbraucher in startrelevante Verbraucher und Bordnetzverbraucher eingeteilt sind,
**dadurch gekennzeichnet, daß**
zwischen der Starterbatterie (2) und den startrelevanten Verbrauchern und zwischen der Bordnetzbatterie (3) und den startrelevanten Verbrauchern jeweils ein Schaltelement angeordnet ist, mittels derer wechselseitig die startrelevanten Verbraucher durch ein Batterie-Steuergerät (6) einer Batterie zuordenbar sind, wobei das Batterie-Steuergerät (6) zwischen der Starterbatterie (2) und den startrelevanten Verbrauchern angeordnet ist und je nach Betriebszustand einen Stromfluß von der Bordnetzbatterie (3) zur Starterbatterie (2) oder von der Starterbatterie (2) zu den startrelevanten Verbrauchern erlaubt.

2. Zwei-Batteriensystem nach Anspruch 1, **dadurch gekennzeichnet, daß** zwischen der Starterbatterie (2) und der Bordnetzbatterie (3) ein weiteres Schaltelement angeordnet, das von dem Batterie-Steuergerät (6) ansteuerbar ist.

3. Zwei-Batteriensystem nach Anspruch 1 oder 2, **dadurch gekennzeichnet, daß** die Schaltelemente als Relais R1-R3 ausgebildet sind.

4. Zwei-Batteriensystem nach Anspruch 3, **dadurch gekennzeichnet, daß** das zwischen Bordnetzbatterie (3) und startrelevanten Verbrauchern angeordnete Relais R3 als Öffner und das zwischen Starterbatterie (2) und startrelevanten Verbrauchern angeordnete Relais R2 als Schließer ausgebildet sind.

5. Zwei-Batteriensystem nach einem der vorangegangenen Ansprüche, **dadurch gekennzeichnet, daß** im Ruhezustand das Batterie-Steuergerät (6) die Starterbatterie (2) von der Bordnetzbatterie (3) elektrisch entkoppelt.

6. Zwei-Batteriensystem nach einem der vorangegangenen Ansprüche, **dadurch gekennzeichnet, daß** im Betriebszustand mit erregtem Generator (5) das Batterie-Steuergerät (6) als Hochsetzsteller wirkt, wodurch sich ein gerichteter Stromfluß von der Bordnetzbatterie (3) über das Batterie-Steuergerät (6) zur Starterbatterie (2) einstellt.

7. Zwei-Batteriensystem nach einem der vorangegangen Ansprüche, **dadurch gekennzeichnet, daß** im Notstartbetrieb über das Batterie-Steuergerät (6) eine elektrische Verbindung zwischen der Starterbatterie (2) und den startrelevanten Verbrauchern herstellbar ist.

8. Zwei-Batteriensystem nach einem der vorangegangenen Ansprüche, **dadurch gekennzeichnet, daß** parallel zu den startrelevanten Verbrauchern ein Relais R4 angeordnet ist, mittels dessen im Notstartbetrieb ein Klemme 15 entsprechendes Signal für die startrelevanten Verbraucher erzeugbar ist.

9. Zwei-Batteriensystem nach einem der vorangegangenen Ansprüche, **dadurch gekennzeichnet, daß** die Relais zur Erzeugung des Klemme 15-Signals bzw. des Klemme 15 entsprechenden Signals über ein Startfreigabe-Steuergerät (7) ansteuerbar sind.

10. Zwei-Batteriensystem nach Anspruch 9, **dadurch gekennzeichnet, daß** das Startfreigabe-Steuergerät (7) mit einer redundanten Spannungsversorgung ausgebildet ist.

11. Verfahren zum Starten und Betreiben eines Zwei-Batteriensystems nach Anspruch 1, umfassend folgende Verfahrensschritte:
a) Zuordnen der elektrischen Verbraucher der Bordnetzbatterie (3) im Ruhezustand,
b) Überprüfen der Bordnetzbatteriespannung vor Einleitung eines Startvorganges durch das Batterie-Steuergerät (6),
c) Umschalten der startrelevanten Verbraucher von der Bordnetzbatterie (3) auf die Starterbatterie (2), wenn die Bordnetzbatterie (3) die startrelevanten Verbraucher nicht ausreichend versorgen kann,
d) Erzeugen eines Klemme 15 und /oder eines Klemme 15 SV- Signals und
e) Bestromen des Starters (4) durch die Starterbatterie (2) und gegebenenfalls die Bordnetzbatterie (3).

12. Verfahren nach Anspruch 11, **dadurch gekennzeichnet, daß** vor einer notwendigen Umschaltung der startrelevanten Verbraucher auf die Starterbatterie (2) zunächst das Batterie-Steuergerät (6) durchgeschaltet wird, anschließend das der Bordnetzbatterie (3) zugeordnete Schaltelement gesperrt wird, das der Starterbatterie (2) zugeordnete Schalterelement durchgeschaltet wird und das Batterie-Steuergerät (6) anschließend sperrt.

13. Verfahren nach Anspruch 12, **dadurch gekennzeichnet, daß** nach erfolgtem Start die Maßnahmen in umgekehrter Reihenfolge zurückgesetzt werden.

14. Verfahren nach Anspruch 11, **dadurch gekennzeichnet, daß** bei einer notwendigen Umschaltung der startrelevanten Verbraucher im Umschaltzeitpunkt das Relais R1 geschlossen wird.
